# EUROPÄISCHE PATENTANMELDUNG

(11) **EP 0 715 476 A2**
(43) Veröffentlichungstag der Anmeldung: **05.06.1996**
(21) Anmeldenummer: 95250289.6
(22) Anmeldetag: 23.11.1995
(51) Int. Cl.: H04Q 7/28

(54) **Verfahren zur anonymen Benutzung eines Funkkommunikationssystems**

(30) Priorität: 28.11.1994 DE 4444394
(71) Anmelder: MANNESMANN Aktiengesellschaft, D-40213 Düsseldorf (DE)
(72) Erfinder: Schlottbom, Karlheinz, Dipl.-Math., D-40885 Ratingen (DE)
(74) Vertreter: Meissner, Peter E., Dipl.-Ing.

(57) **Zusammenfassung**

Die Erfindung betrifft ein Verfahren zur Benutzung eines Kommunikationssystems mit einem Datenübertragungssystem, insbesondere einem Mobilfunknetz, durch einzelne Teilnehmer zur Übertragung von Informationen an mindestens einen Empfänger, bei dem eine Zugangskennung als Nutzungsberechtigung für die Inanspruchnahme von Leistungen des Kommunikationssystems erforderlich ist. Um trotzdem eine vollkommene Anonymität jedes einzelnen Teilnehmers gegenüber dem Empfänger zu wahren, wird vorgeschlagen, daß einer Gruppe von Teilnehmern eine Gruppenkennung, die ein Weiterreichen der Zugangskennung verhindert, zugeteilt und als Teil der Daten mitübertragen wird. Zusätzlich wird bei jeder Informationsübertragung an den Empfänger eine zumindest für einen Zeitabschnitt gleichbleibende Individualkennung mitübertragen, die dem Empfänger lediglich eine Unterscheidung aber keine Identifizierung der Teilnehmer der Gruppe ermöglicht.

## Beschreibung

Die Erfindung betrifft ein Verfahren zur Benutzung eines Kommunikationssystems mit einem Datenübertragungssystem, insbesondere einem Mobilfunknetz, durch einzelne Teilnehmer zur Übertragung von Informationen an mindestens einen Empfänger, bei dem eine Zugangskennung als Nutzungsberechtigung für die Inanspruchnahme von Leistungen des Kommunikationssystems erforderlich ist.

Mobilfunknetze sind als spezielle Kommunikationssysteme zur Übertragung von Informationen zwischen mit Mobilfunktelefonen ausgerüsteten Teilnehmern bekannt. Die große räumliche Ausdehnung eines Mobilfunknetzes ermöglicht es insbesondere einer Vielzahl von Teilnehmern, die sich an nahezu beliebigen Ortspositionen mit beliebiger Geschwindigkeit bewegen, Informationen an einen Empfänger zu übermitteln. Das Mobilfunknetz fungiert dabei als Übermittler der Informationen, d.h. von den Teilnehmern wird für die Dauer der Verbindung eine Vermittlungs- und Übertragungsleistung in Anspruch genommen, für die in der Regel Nutzungsgebühren anfallen. Die Nutzungsgebühren werden dabei üblicherweise einem der beiden Teilnehmer der Verbindung in Rechnung gestellt. Dazu ist es erforderlich, daß der Nutzer des Mobilfunknetzes eindeutig identifiziert werden kann, was üblicherweise über eine mit der Nutzungsberechtigung zugewiesene Mobilfunknummer erfolgt, so daß dem Inhaber der Zugangsberechtigung die anfallenden Gebühren vom Betreiber des Mobilfunknetzes in Rechnung gestellt werden können. Eine anonyme Inanspruchnahme der Mittler-Leistungen eines Mobilfunknetzes ist dabei nicht vorgesehen. Folglich erscheint beispielsweise eine Erhebung aktueller Fahrzeugdaten einer Vielzahl individueller Fahrzeuge zur Verkehrslageerfassung, bei dem die erfaßten aktuellen Daten über ein Mobilfunknetz an einen Verkehrsrechner übertragen werden, datenschutzrechtlich zunächst problematisch, weil in einem solchen Falle bei üblicher Benutzung eines Mobilfunknetzes die Anonymität der Fahrzeugführer nicht gewahrt bliebe, obwohl ein Mobilfunknetz aus technischer Sicht für diese Übermittlungsaufgabe bestens geeignet wäre.

Es ist **Aufgabe** der vorliegenden Erfindung, ein Verfahren zur Benutzung eines Kommunikationssystems mit einem Datenübertragungssystem, insbesondere einem Mobilfunknetz, anzugeben, bei dem eine Zugangskennung als Zugangsberechtigung für die Inanspruchnahme von Leistungen des Kommunikationssystems erforderlich ist und trotzdem eine vollkommene Anonymität jedes einzelnen Teilnehmers bei der Übertragung von Informationen an mindestens einen Empfänger gewahrt bleibt.

Die **Lösung** dieser Aufgabe ist erfindungsgemäß gekennzeichnet durch die im Patentanspruch 1 angegebenen Merkmale. Durch die kennzeichnenden Merkmale der Unteransprüche 2 bis 10 ist dieses Verfahren in vorteilhafter Weise weiter ausgestaltbar. Eine Vorrichtung zur Durchführung des erfindungsgemäßen Verfahrens weist die Merkmale des Patentanspruchs 11 auf.

Die Erfindung sieht vor, daß einer Gruppe von Teilnehmern eine Gruppenkennung zugeteilt und als Teil der Daten mitübertragen wird, wobei die Gruppenkennung ein Weiterreichen der Zugangskennung verhindert. Dadurch wird also einerseits der Zugang zum Kommunikationssystem ermöglicht, andererseits aber beim Empfänger keinen Rückschluß auf den individuellen Inanspruchnehmer der Leistung zugelassen.

Die in manchen Fällen absolut notwendige eindeutige Unterscheidbarkeit der Teilnehmer wird dabei in Weiterbildung der Erfindung dadurch gewährleistet, daß bei jeder Informationsübertragung an den Empfänger eine zumindest für einen Zeitabschnitt gleichbleibende Individualkennung mitübertragen wird. Die Individualkennung ermöglicht dem Empfänger dabei lediglich eine Unterscheidung aber keine Identifizierung der Teilnehmer der Gruppe, so daß von einem Teilnehmer zu unterschiedlichen Zeitpunkten übermittelte Daten genau einem und nicht mehreren Teilnehmern zugeordnet werden, es also bei der Auswertung der übertragenen Daten beispielsweise zu keiner unerwünschten Datenvermischung kommt und damit individuelle Datenprofile erstellbar und auswertbar sind.

Vorteilhafterweise wird die Individualkennung durch einen Kennungsserver des Datenübertragungssystems erzeugt, auf den der Empfänger der Informationen keinen Einfluß hat.

Altemativ dazu wird mit der Erfindung vorgeschlagen, die Individualkennung durch den Teilnehmer erzeugen zu lassen. Mit besonders geringem Aufwand kann insbesondere der Fahrzeugort und/oder die Zeit beim Start des Fahrzeugs als Individualkennung verwendet werden.

Bei einer weiteren Ausgestaltung wird die Individualkennung den aktiven Teilnehmern jeweils bei der ersten innerhalb eines vorgegebenen Zeitabschnitts liegenden Informationsübertragung zum Empfänger dem entsprechenden Teilnehmer vom Empfänger zugeordnet, d.h. der Teilnehmer erhält vom Empfänger bei der ersten Informationsübertragung eine neue Individualkennung; die Verwaltung der Individualkennungen erfolgt also durch den Empfänger.

Zweckmäßigerweise wird die Individualkennung durch einen speziellen Algorithmus, z.B. einen Zufallsalgorithmus, erzeugt.

Eine weitere vorteilhafte Ausgestaltung der Erfindung besteht darin, die Individualkennung den Teilnehmern bereits bei Vergabe der Gruppenkennung zuzuordnen.

Um einen Mißbrauch von Leistungen des Kommunikationssystems zu verhindern, wird mit der Erfindung vorgeschlagen, daß die Gruppenkennung den Teilnehmern nur eine Inanspruchnahme von speziellen Leistungen gestattet, insbesondere lediglich die Übertragung von Informationen an einen eindeutig definierten Empfänger.

Alternativ dazu kann den Teilnehmern der Gruppe die Individualkennung mit Vorteil bereits bei der Vergabe der Gruppenkennung zugeordnet werden.

Ein Kommunikationssystem zur Übertragung von Informationen an mindestens einen Empfänger mit einem Datenübertragungssystem, insbesondere mit einem Mobilfunknetz, bei dem eine Zugangskennung als Nutzungsberechtigung erforderlich ist, umfaßt einen Kennungsserver, durch den für jeden Teilnehmer einer Gruppe mit zugeordneter Gruppenkennung jeweils eine Kennzahl ermittelbar ist. Diese Kennzahl ist bei jeder Informationsübertragung an den Empfänger als eine zumindest für einen Zeitabschnitt gleichbleibende Individualkennung des Teilnehmers mitübertragbar, wobei die Übertragung der Kennzahl bei jeder Informationsübertragung an den Empfänger vorteilhafterweise selbsttätig erfolgt. Insbesondere kann die Kennzahl eine Zufallszahl sein, die durch einen Zufallsgenerator erzeugbar ist; eine solche Zahl erfüllt alle Anforderungen, die an eine vollkommene Anonymisierung der Informationsübertragung bei eindeutiger Unterscheidbarkeit aller Teilnehmer gestellt wird.

Anhand des im folgenden am Beispiel der Verkehrsdatenerhebung unter Inanspruchnahme eines Mobilfunknetzes zur Übertragung der Verkehrsdaten von einzelnen individuellen Probefahrzeugen an einen Verkehrsrechner beschriebenen Verfahrens wird die Erfindung nachfolgend beispielhaft erläutert.

Das Ausführungsbeispiel bezieht sich auf den speziellen Fall der Erhebung von Verkehrsdaten durch das Sammeln und Analysieren der Fahrdaten individueller Probefahrzeuge einer ausgewählten Gruppe von Fahrzeugen durch einen außerhalb der Probefahrzeuge angeordneten Verkehrslagerechner. Zum Empfang der Fahrdaten weist der Verkehrslagerechner eine Kommunikationseinheit auf, die mit einem entsprechenden Sender/Empfänger ausgestattet ist; über diesen ist der Verkehrslagerechner mit einem Mobilfunknetz verbindbar. Das Mobilfunknetz ermöglicht es, die sich räumlich verteilt auf einem Straßennetz bewegenden Probefahrzeuge jederzeit datentechnisch mit dem Verkehrslagerechner zu verbinden. Es ist mit entsprechenden Einrichtungen versehen, welche die Anmeldung der einzelnen Fahrzeuge im Funknetz durch den Empfang und die Dekodierung der Zugangskennung ermöglichen, um beispielsweise über die Identifizierung des Inhabers der Nutzungsberechtigung diesen mit den bei der Übertragung der Daten anfallenden Gebühren zu belasten.

Die ausgewählten Probefahrzeuge, deren Fahrdaten zur Verkehrslageerhebung erfaßt werden sollen, weisen ebenfalls einen Sender/Empfänger, z.B. ein Funktelefon, auf, der die Übertragung der Fahrdaten an die nächste Empfangsstation des Mobilfunknetzes ermöglicht, so daß diese über das Mobilfunknetz an den Verkehrslagerechner weiterleitbar sind. Ein im Probefahrzeug installiertes Fahrdatenerfassungssystem sorgt für eine Erfassung und Aufbereitung der Fahrdaten des Fahrzeugs, beispielsweise der aktuellen Ortsposition und der mittleren Fahrzeuggeschwindigkeit. In einem Speicherelement des Senders ist eine Zugangskennung und insbesondere eine zugeordnete Gruppenkennung abgelegt. Die Gruppenkennung und die Zugangskennung sind ebenfalls über das Funktelefon an das Mobilfunknetz übertragbar, wobei die Zugangskennung die ordnungsgemäße Anmeldung im Mobilfunknetz ermöglicht. Die Gruppenkennung ist über das Funktelefon an das Mobilfunknetz mitübertragbar und bewirkt eine Sperrung der Weitergabe der Zugangskennung durch das Mobilfunknetz, insbesondere an den Empfänger, so daß die Anonymität des Probefahrzeugs sowie des Fahrzeugführers nach außen hin vollständig gewahrt bleibt.

Eine sehr spezielle, dafür aber sehr einfache Ausgestaltung sieht vor, die Telefonnummer des Empfängers als Gruppenkennung zu verwenden. Diese Variante ist dann besonders vorteilhaft, wenn der Verkehrsrechner z.B. nur die Daten einer einzigen Gruppe von Probefahrzeugen regelmäßig erfaßt. Bei mehreren Gruppen ist es bei dieser Variante unter Umständen erforderlich, dem Verkehrsrechner mehrere Telefonnummem zuzuordnen, wobei dann jede Gruppe jeweils eine dieser Telefonnummem erhält.

Bei der bevorzugten Ausführungsform weist das Kommunikationssystem außerdem einen Kennungsserver auf, durch den für jeden Teilnehmer, dem eine Gruppenkennung zugeordnet ist, jeweils eine Kennzahl ermittelbar ist. Dabei wird die Kennzahl vorzugsweise durch einen Algorithmus erzeugt. Bei jeder Informationsübertragung an den Empfänger ist diese Kennzahl als Individualkennung des Teilnehmers mitübertragbar, wobei die Übertragung der Kennzahl bei jeder Informationsübertragung an den Empfänger vorteilhafterweise selbsttätig durch das Kommunikationssystem erfolgt, d.h. meldet ein Fahrzeug mit einer Zugangskennung und einer Gruppenkennung ein Gespräch an einen bestimmten Empfänger an, so sorgt das Kommunikationssystem dafür, daß die übertragene Information zusätzlich die zugeordnete Kennzahl enthält. Diese Kennzahl ist die zumindest für einen Zeitabschnitt, z.B. für einen Tag oder für eine Fahrt, gleichbleibende Individualkennung dieses Teilnehmers. Insbesondere kann die Kennzahl eine durch einen Zufallsgenerator erzeugbare Zufallszahl sein; eine solche Zahl erfüllt alle Anforderungen, die an eine vollkommene Anonymisierung der Informationsübertragung bei eindeutiger Unterscheidbarkeit aller Teilnehmer gestellt wird.

Mit dem Starten des Probefahrzeugs werden in vorgegebenen zeitlichen oder räumlichen Abständen die Fahrdaten des Probefahrzeugs zur Übertragung bereitgestellt. Das Funktelefon überträgt dann z.B. regelmäßig die Daten zusammen mit der Zugangskennung, der Gruppenkennung und der Telefonnummer des Empfängers an das Mobilfunknetz. Das Mobilfunknetz stellt anschließend aufgrund der übermittelten Telefonnummer die Verbindung zum Empfänger her, also beispielsweise zum Verkehrsrechner. Aufgrund der Gruppenkennung werden nur die Daten, nicht aber die den Teilnehmer identifizierende Zugangskennung, an den in diesem Beispiel eindeutig definierten Abnehmer, nämlich den Verkehrsrechner, weitergeleitet. Wurde dem entsprechenden Teilnehmer vom Kennungsserver noch keine Individualkennung zugeordnet, so erfolgt ferner die Erzeugung und Zuordnung der Individualkennung. Das Mobilfunknetz fügt dann in die zu übertragenden Daten die zugeordnete Individualkennung des entsprechenden Teilnehmers ein und leitet die so erweiterten Daten an den Verkehrsrechner weiter. Ein Mißbrauch ist unter diesen Bedingungen folglich nicht möglich, da die Identität des Senders nur innerhalb des Mobilfunknetzes bekannt ist.

Durch die Übermittlung der Individualkennung ist es dem Verkehrsrechner möglich, vollkommen anonym individuelle Fahrprofile zu gewinnen. Die Fahrdaten ein und desselben Probefahrzeugs sind aufgrund der Individualkennung eindeutig diesem Fahrzeug zuordenbar. Um welches Fahrzeug es sich konkret handelt, ist anhand der Individualkennung nicht feststellbar.

Bei alternativen Ausgestaltungen wird die Individualkennung beispielsweise durch den Teilnehmer erzeugt, insbesondere mit einem Zufallsalgorithmus. Oder aber der Fahrzeugort und/oder die Zeit beim Start des Fahrzeugs wird vom Probefahrzeug als Individualkennung verwendet und bei jeder Informationsübertragung mitübertragen, was einen besonders geringen zusätzlichen Aufwand bedeutet.

Eine weitere sehr spezielle Ausgestaltung der Erfindung besteht darin, die Individualkennung den Teilnehmern bereits bei Vergabe der Gruppenkennung zuzuordnen. Generell kann die Individualkennung durch einen speziellen Algorithmus, z.B. einen Zufallsalgorithmus, erzeugt werden; insbesondere in letzterem Fall ist diese Variante vorgesehen, um die Anonymität der Teilnehmer dadurch zu wahren, daß die Zuordnung der Individualkennung zwar beim Verkehrsrechner, aber eben zufällig erfolgt, d.h. ohne Registrierung der Individualkennung zusammen mit den persönlichen Daten des entsprechenden Teilnehmers durch den Verkehrsrechner.

Um einen Mißbrauch von Leistungen des Kommunikationssystems zu verhindern, gestattet die Gruppenkennung den Teilnehmern nur eine Inanspruchnahme von speziellen Leistungen, insbesondere die Übertragung von Informationen nur an einen eindeutig definierten Empfänger. Zur Überwachung der eingeschränkten Inanspruchnahme von Übermittlungsleistungen ist eine an sich bekannte Überwachungseinheit des Kommunikationssystems vorgesehen.

Selbstverständlich ist es auch möglich, daß dem entsprechenden Teilnehmer der Empfänger, also der Verkehrsrechner, bei der ersten Übertragung der Daten innerhalb eines vorgegebenen Zeitabschnitts die Individualkennung zuordnet. Zweckmäßigerweise erfolgt die erste Datenübertragung dann beispielsweise mit einer vorgeschalteten Nullkennung, die bei allen weiteren Datenübertragungen durch die vom Verkehrsrechner zugewiesene Individualkennung ersetzt wird. Die Individualkennung wird in einem solchen Falle vom Verkehrsrechner während der ersten Kontaktaufnahme direkt über das Mobilfunknetz an das entsprechende Probefahrzeug übertragen. Dabei ist auf jeden Fall sichergestellt, daß jedes Probefahrzeug eine andere Kennummer erhält; bei der Erzeugung einer Zufallszahl als Individualkennung im Probefahrzeug könnte es dagegen zufälligerweise auch dazu kommen, daß, wenn auch mit sehr geringer Wahrscheinlichkeit, z.B. zwei Probefahrzeuge die gleiche Kennnummer haben.

Grundsätzlich ist es auch allein auf der Basis der Gruppenkennung möglich, eine sinnvolle Verkehrslageerfassung durchzuführen. So ist es beispielsweise nicht notwendig, bei einem Fahrzeug, das gerade eine Verkehrsstau erreicht hat und eine entsprechende Meldung absetzt, dessen individuelle Zugangskennung zu kennen. Für eine hochwertige Verkehrslageerfassung mit z.B. aktuellen Informationen über die Fahrgeschwindigkeit ist dagegen eine Unterscheidbarkeit der Gruppenteilnehmer von großem Wert.

## Patentansprüche

1. Verfahren zur Benutzung eines Kommunikationssystems mit einem Datenübertragungssystem, insbesondere einem Mobilfunknetz, durch einzelne Teilnehmer zur Übertragung von Informationen an mindestens einen Empfänger, bei dem eine Zugangskennung als Nutzungsberechtigung für die Inanspruchnahme von Leistungen des Kommunikationssystems erforderlich ist,
**dadurch gekennzeichnet,**
daß einer Gruppe von Teilnehmern eine Gruppenkennung, die ein Weiterreichen der Zugangskennung verhindert, zugeteilt und als Teil der Daten mitübertragen wird.

2. Verfahren nach Anspruch 1,
**dadurch gekennzeichnet,**
daß bei jeder Informationsübertragung an den Empfänger zusätzlich eine zumindest für einen Zeitabschnitt gleichbleibende Individualkennung mitübertragen wird, die dem Empfänger lediglich eine Unterscheidung aber keine Identifizierung der Teilnehmer der Gruppe ermöglicht.

3. Verfahren nach Anspruch 2,
**dadurch gekennzeichnet,**
daß die Individualkennung durch einen Kennungsserver des Datenübertragungssystems erzeugt wird.

4. Verfahren nach Anspruch 2,
**dadurch gekennzeichnet,**
daß die Individualkennung durch den Teilnehmer erzeugt wird.

5. Verfahren nach Anspruch 2,
**dadurch gekennzeichnet,**
daß die Individualkennung dem Teilnehmer jeweils bei der ersten innerhalb eines vorgegebenen Zeitabschnitts liegenden Informationsübertragung vom Empfänger neu zugeordnet wird.

6. Verfahren nach Anspruch 2,
**dadurch gekennzeichnet,**
daß bei Benutzung des Kommunikationssystems durch den Teilnehmer in einem Fahrzeug als Individualkennung der Fahrzeugort und/oder die Zeit beim Start des Fahrzeugs verwendet wird.

7. Verfahren nach Anspruch 2,
**dadurch gekennzeichnet,**
daß die Individualkennung dem Teilnehmer bei Vergabe der Gruppenkennung zugeordnet wird.

8. Verfahren nach einem der Ansprüche 2 bis 7,
**dadurch gekennzeichnet,**
daß die Individualkennung durch einen Algorithmus erzeugt wird.

9. Verfahren nach Anspruch 1,
**dadurch gekennzeichnet,**
daß die Gruppenkennung den Teilnehmern nur eine begrenzte Inanspruchnahme von Leistungen des Kommunikationssystems gestattet.

10. Verfahren nach Anspruch 9,
**dadurch gekennzeichnet,**
daß die Gruppenkennung den Teilnehmern die Übertragung von Informationen nur an einen eindeutig definierten Empfänger gestattet.

11. Kommunikationssystem zur Übertragung von Informationen an mindestens einen Empfänger mit einem Datenübertragungssystem, insbesondere mit einem Mobilfunknetz, das eine Zugangskennung als Nutzungsberechtigung des Kommunikationssystems umfaßt,
**dadurch gekennzeichnet,**
daß den Teilnehmern einer Gruppe jeweils eine Gruppenkennung zugeordnet ist und
daß ein Kennungsserver vorgesehen ist, durch den für jeden Teilnehmer, dem eine Gruppenkennung zugeordnet ist, jeweils eine Kennzahl ermittelbar ist, die bei jeder Informationsübertragung an den Empfänger als eine zumindest für einen Zeitabschnitt gleichbleibende Individualkennung des Teilnehmers mitübertragbar ist.
